# FASCICULE DE BREVET EUROPEEN

(11) **EP 0 484 208 B1**
(45) Date de publication et mention de la délivrance du brevet: **01.12.1993**
(21) Numéro de dépôt: 91402834.5
(22) Date de dépôt: 23.10.1991
(51) Int. Cl.: E21B 43/02, E21B 33/13

(54) **Méthode et dispositif pour consolider une formation traversée par un puits dévié**
Verfahren und Einrichtung zur Konsolidierung einer von einem geneigten Bohrloch durchquerten Formation
Method and device for consolidation of a formation traversed by a deviated well

(30) Priorité: 02.11.1990 FR 9013693
(43) Date de publication de la demande: 06.05.1992
(73) Titulaire: INSTITUT FRANCAIS DU PETROLE, 92502 Rueil-Malmaison (FR)
(72) Inventeur: Gadelle, Claude, F-92500 Rueil-Malmaison (FR); Lessi, Jacques, F-78580 Maule (FR)

(56) Documents cités:
- EP-A- 0 242 472
- EP-A- 0 266 792
- WO-A-90/01609
- FR-A- 2 474 558
- FR-A- 2 575 500
- WORLD OIL. no. 5, 5 Novembre 1988, HOUSTON US pages 54 - 60; D.D.SPARLIN ET AL.: 'controlling sand in a horizontal completition'

## Description

La présente invention a pour objet une méthode et un dispositif pour la consolidation d'une formation géologique traversée par un puits dévié au moyen d'une substance que l'on polymérise in situ par injection d'un gaz. Une application possible de l'invention est la consolidation de puits déviés forés au travers de zones-réservoirs souterraines renfermant des effluents pétroliers et mis en production.

Les procédés Oxpol et Thermopol (OXPOL et THERMOPOL sont des marques déposées par le demandeur) décrit notamment dans les brevets français 2 474 558 et 2 575 500, sont utilisés pour consolider des puits forés dans des formations géologiques perméables contenant des effluents pétroliers. Ils s'appliquent par exemple dans des puits de production traversant des zones sableuses et permet d'empêcher les venues de sable.

Le procédé ci-dessus mentionné assure la consolidation d'une zone perméable par une injection d'une substance polymérisable in situ qui lie les éléments non consolidés d'une formation.

Cette substance peut être un mélange liquide de produits organiques contenant au moins un composé chimique polymérisable et un catalyseur, ce mélange pouvant être polymérisé au contact d'un gaz oxydant (procédé OXPOL). La réaction démarre à la température normale de la formation. Elle est exothermique et conduit à la formation d'un film polymérique qui lie les particules instables du terrain et lui donne une bonne cohésion, sans affecter notablement sa perméabilité. Le procédé est appliqué à des puits verticaux et comporte l'injection successive du mélange et du gaz oxydant, séparé par un volume d'une substance peu oxydable tel qu'un solvant ou une coupe pétrolière de manière à empêcher une réaction prématurée.

Cette substance peut encore être un mélange de produits organiques liquides susceptibles de polymériser par une élévation de température (procédé THERMOPOL). Ceci est réalisé aprés introduction du mélange dans la formation par injection d'un gaz chaud chimiquement inerte.

Par les techniques précédentes, l'avancement de la réaction est contrôlable par ajustement de la composition du mélange polymérisable et des caractéristiques du gaz réagissant. Le débit de gaz passant au travers du volume à consolider, élimine les risques de colmatage par le polymère formé.

L'influence de la pesanteur contribue à faciliter la mise en oeuvre du procédé dans les puits verticaux ou peu inclinés par rapport à la verticale. Elle agit utilement sur le déplacement des constituants injecté pour obtenir une bonne pénétration dans les formations à colmater. Le gaz réagissant injecté à la suite du mélange organique, a tendance à rester au-dessus de lui et un volume fluide, on l'a vu, suffit à maintenir la séparation et empêcher une réaction prématurée. La mise en oeuvre d'un tel procédé dans des puits dont une partie est horizontale ou presque horizontale, présente des difficultés particuliéres du fait que la pesanteur n'intervient plus de façon aussi favorable pour déplacer les constituants et pour séparer le mélange liquide du gaz réagissant.

Par la demande de brevet EP-A-242.472, on connait une méthode de cimentation d'un casing dans un puits consistant essentiellement à injecter du ciment à l'intérieur du casing et à le pousser jusqu'à sa base pour le faire remonter dans l'espace annulaire, au moyen d'un bouchon solide que l'on propulse par injection de boue.

Par la demande de brevet WO-A-90/01609 qui décrit un procédé de décontamination d'un panache d'eau (water plume) dans une zone souterraine, on connait l'utilisation dans des drains horizontaux, de tubes pourvues d'ouvertures latérales.

La méthode selon l'invention permet une adaptation des procédés de consolidation de formations par polymérisation à chaud tels que le procédé Oxpol, aux parties déviées de puits forés au travers de formations instables et notamment de parties horizontales ou presque horizontales. Elle comporte la limitation de la zone à consolider par interposition entre elle et le reste du puits, d'au moins un organe de confinement, tel qu'un packer, l'injection jusqu'à l'intérieur de la zone à consolider et au moyen d'un tube d'injection, d'une substance liquide polymérisable par action d'un gaz réagissant suivie de l'injection par le même tube d'une quantité dudit gaz propre à la polymérisation in situ de la substance liquide (voir FR-A-2.575.500).

La méthode est caractérisée en ce qu'elle comporte la combinaison d'étapes suivantes :
- on met en place sur toute une longueur de puits dévié à consolider, un tube avec une partie terminale pourvue d'ouvertures latérales réparties sur sa longueur;
- on répartit de la substance liquide et du gaz réagissant sur toute la longueur du puits au moyen du tube successivement.
- on injecte de la substance liquide suivant au moins une première phase de circulation entre l'intérieur du tube et l'espace annulaire autour du tube, suivie d'au moins une phase de mise en pression de la substance liquide de manière à forcer la pénétration de celle-ci dans la formation à consolider sur une certaine épaisseur autour du puits;
- on interpose un moyen de séparation solide entre la substance liquide et le gaz réagissant de façon à empêcher leur interaction tant que le gaz n'est pas parvenu dans ladite partie terminale du tube d'injection et on le propulse par injection du gaz réagissant.

La méthode selon l'invention comporte de préférence le confinement d'une zone à consolider par interposition de deux organes de confinement de part et d'autre de ladite zone.

On fait interagir la substance liquide et le gaz réagissant, par échappement du gaz au travers des ouvertures latérales de la partie terminale du tube d'injection.

On peut aussi injecter des produits solvants par le tube avant l'injection de ladite substance liquide.

La méthode peut comporter par exemple des opérations d'évacuation de matériaux non consolidés encombrant ladite zone d'intervention.

Le dispositif de mise en oeuvre de la méthode permettant la consolidation des parois d'une zone de puits dévié foré au travers d'une formation géologique instable, comporte un tube d'injection, des moyens d'injection adaptés à injecter successivement jusqu'à l'intérieur de la zone à consolider une substance liquide polymérisable par action d'un gaz réagissant et ensuite une quantité dudit gaz propre à la polymérisation in situ de la substance liquide et des moyens de confinement pour isoler la partie du puits traversant la zone à consolider (voir FR-A-2.575.500).

Il est caractérisé en ce qu'il comporte des moyens de séparation solides déplaçables à l'intérieur du tube d'injection pour séparer la substance liquide et le gaz réagissant injectés à la suite l'un de l'autre dans le tube et empêcher leur interaction hors de la zone d'intervention, ledit tube comportant une partie terminale de communication avec le puits pourvue d'ouvertures réparties sur toute sa longueur, et en ce que la partie terminale du tube d'injection est entourée d'un manchon allongé dont la paroi est traversée d'orifices répartis sur une partie au moins de sa longueur, ledit manchon communiquant avec le tube par des ouvertures ménagées dans la paroi de celui-ci à une certaine distance de son extrémité, le dispositif comportant en outre des moyens pour faire communiquer le tube et le manchon par intermittence.

Les moyens de communication entre le tube et le manchon comportent par exemple une bague déplaçable à l'intérieur du tube entre une position où elle masque lesdites ouvertures et une position d'effacement, cette bague comportant un butée pour ledit moyen de séparation, le déplacement de celui-ci en appui contre ladite butée ayant pour effet de démasquer lesdites ouvertures.

D'autres caractéristiques et avantages du procédé et du dispositif selon l'invention apparaîtront mieux à la lecture de la description ci-aprés de deux modes de réalisation décrits à titre d'exemples non limitatifs, en se référant aux dessins annexés où :
- la Fig.1 montre schématiquement le dispositif d'injection installé dans un puits à consolider; et
- la fig.2 montre une variante du mode de réalisation précédent permettant une distribution améliorée du gaz.

Le premier mode de réalisation de la méthode selon l'invention, est appliqué dans un puits 1 dont une partie au moins est déviée. Cette partie est forée au travers d'une couche 2 perméable et instable. Il peut s'agir par exemple d'une couche sableuse. Dans le puits 1 est mis en place un tube de cuvelage ou casing 3 tenu en place éventuellement par cimentation. Le casing 3 est pourvu de perforations 4 dans sa partie qui traverse la formation 2 productrice d'effluents pétroliers.

Pour stabiliser la formation dans les zones où elle est instable, et empêcher des venues de sable au travers du cuvelage 3, on descend dans le puits un tube d'injection 5 par où on va introduire successivement un mélange organique polymérisable par action d'un gaz et un volume de ce gaz suffisant pour provoquer une réaction de polymérisation exothermique. Le tube 5 est connecté avec un système d'injection 6 en surface comportant un ensemble 6A de pompage de liquide et un ensemble 6B de compression de gaz par l'intermédiaire d'une vanne d'injection 7A. Une vanne d'injection 7B commande l'éjection de fluide hors de l'espace annulaire autour du tube 5. La section de la partie terminale inférieure du tube 5 est voisine de celle du casing 3, de façon à faciliter l'entrée des produits injectés dans les formations environnant le puits. Au voisinage de la zone à traiter, entre elle et la surface, le tube 5 est associé extérieurement à un organe de confinement 8 du genre packer par exemple susceptible, sur commande, de clore l'annulaire entre le tube 5 et le tube de cuvelage 3. Un siège 9 pour un bouchon coulissant 10 est associé au tube 5 à son extrémité inférieure.

Le tube d'injection 5 comporte une section terminale d'injection 5A pourvue d'ouvertures latérales calibrées 11, de manière à mieux répartir le gaz réagissant et obtenir une meilleure diffusion de celui-ci sur un plus grand volume de la formation traversée par le puits. A son extrémité, on peut adapter un piston racleur 12 de section peu différente de celle du casing 3 de manière à repousser vers le fond du puits le sable qu'il peut contenir.

Le packer 8 étant ouvert, on commence par injecter dans le tube 5, des produits solvants, de préférence plusieurs successivement. Le premier solvant est injecté en quantité suffisante correspondant à plusieurs fois le volume de l'annulaire autour de la partie terminale d'injection 5A, ceci afin de bien débarrasser cette partie du puits de tous les effluents pétroliers qu'elle contient. On ferme alors la vanne d'éjection 7B pour forcer le solvant à pénétrer dans la formation et à nettoyer la zone à la périphérie du puits.

De préférence, on injecte un deuxième solvant pour éliminer du puits le premier solvant et l'eau puis si nécessaire un troisième solvant pour éliminer le deuxième. Par fermeture intermittente de la vanne d'éjection 7B, on force les solvants successifs dans la formation.

La mise en place des constituants pour la polymérisation peut alors commencer.

On injecte un mélange L de substances polymérisable par action d'un gaz G tel que défini dans les deux brevets français précités par exemple. On augmente le débit d'injection en ouvrant la vanne d'éjection 7B tant que l'on n'est pas revenu à la pression initiale de circulation. On fait circuler le mélange jusqu'à obtenir en retour le même volume excédentaire (plusieurs fois le volume de l'annulaire comme précédemment). Par fermeture de la vanne d'éjection 7B, on force l'entrée du mélange dans toute la zone périphérique à consolider autour du puits. A la fin de cete étape d'injection, le tube 5 est rempli de mélange en légère surpression.

Le packer 8 est ensuite fermé de manière à restreindre à la zone à consolider l'action de polymérisation à entreprendre. On introduit le bouchon 10 dans le tube d'injection 5 et on le propulse par une injection de gaz réagissant, un gaz oxydant ou un gaz chaud selon la variante du procédé utilisée. Le bouchon 10 permet de maintenir le mélange liquide L contenu dans le tube bien séparé du gaz G qui le pousse vers la zone d'intervention surtout dans les parties horizontales où l'interface entre eux s'agrandit et devient instable. Dans son déplacement, il force le mélange liquide encore dans le tube 5 à pénétrer dans la formation à consolider et il nettoie celui-ci. Quand le bouchon 10 atteint la section terminale d'injection 5A du tube 5 percée d'ouvertures 11, une partie du gaz G commence à s'échapper dans l'annulaire tube-casing et à pénétrer dans la formation 2. Le déplacement du bouchon se poursuit car les pertes de charge dues à l'échappement du gaz sont suffisantes. Si la pression d'injection est suffisante, le bouchon vient se bloquer contre le siège 9 au bout du tube 5.

Le gaz injecté réagit avec le mélange liquide dans la partie des terrains environnant le puits sur une partie au moins de la longueur de la section terminale 5A. Le gaz est injecté en quantité suffisante pour stabiliser les terrains sans altération notable de leur perméabilité.

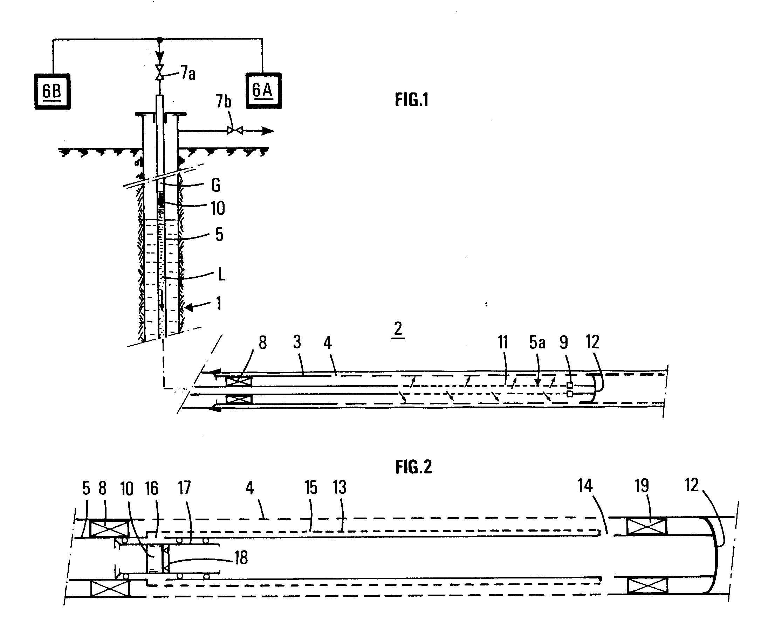

Suivant le mode de réalisation de la Fig.2, la partie terminale 5A du tube d'injection est entourée d'un manchon 13. La partie terminale 5A communique avec le puits 1 vers son extrémité 14. Le manchon 13 est pourvu d'orifices 15 répartis sur toute sa longueur et communique avec le tube par des lumières 16 pouvant être ouvertes par intermittence. Elles sont masquées par exemple par une bague 17 coulissant à l'intérieur de la partie terminale 5A et pourvue intérieurement d'un siège 18 pour le bouchon 10. Les lumières sont normalement masquées par la bague.

Le mélange liquide L est repoussé dans l'annulaire tube-casing par les ouvertures d'extrémité 14. L'arrivée du bouchon 10 sous la poussée du gaz réagissant, pousse la bague 17, ce qui démasque les lumières 16 et permet au gaz de pénétrer dans tout le manchon 13 puis entre lui et le casing 3.

Par cette ouverture différée, on sépare mieux les fonctions de circulation et de forçage du liquide dans les formations environnant le puits, de la fonction d'injection du gaz.

Dans le cas où la zone à consolider est supérieure à la longueur de la section terminale 5A du tube d'injection au-delà du packer 8, on peut procéder par étapes successives. Dans ce cas, on dispose un autre packer 19 vers l'extrémité du tube 5 et l'on effectue l'ensemble des opérations précédentes d'injection pour chaque portion de zone délimitée par les deux packers 8, 19.

Pour rendre plus efficaces les opérations de consolidation, on peut les faire précéder d'étapes de nettoyage du puits dans le cas où il est plus ou moins encombré de matériaux issus de la formation. On utilise dans ce cas différentes techniques connues : dessablage à l'aide d'un outil spécialisé, déplacement des matériaux hors de la zone par raclage, entraînement par un courant de liquide à vitesse élevée, injection d'eau et de gaz etc.

## Revendications

1. Méthode pour la consolidation des parois d'un puits dévié (1) foré au travers d'une formation géologique instable (2) comportant la limitation de la zone à consolider par interposition entre elle et le reste du puits, d'au moins un organe de confinement (8), l'injection jusque à l'intérieur de la zone à consolider et au moyen d'un tube d'injection (5), d'une substance liquide (L) polymérisable par action d'un gaz réagissant (G), suivie de l'injection par le même tube d'une quantité dudit gaz propre à la polymérisation in situ de la substance liquide, caractérisée en ce qu'elle comporte les combinaisons des étapes suivantes :
- l'on met en place sur toute une longueur de puits dévié à consolider un tube avec une partie terminale (5A) pourvue d'ouvertures latérales (11) réparties sur sa longueur;
- on répartit de la substance liquide et du gaz réagissant sur toute une longueur dudit puits au moyen dudit tube successivement :
- en injectant de la substance liquide suivant au moins une première phase de circulation entre l'intérieur du tube et l'espace annulaire autour du tube suivie d'au moins une phase de mise en pression de ladite substance, de manière à forcer la pénétration de celle-ci dans la formation à consolider sur une certaine épaisseur autour du puits;
- en interposant un moyen de séparation solide (10) entre la substance liquide (L) et le gaz réagissant (G) de façon à empêcher leur interaction tant que le gaz n'est pas parvenu dans ladite partie terminale du tube d'injection et on le propulse par injection dudit gaz réagissant.

2. Méthode selon la revendication précédente, caractérisée en ce qu'elle comporte le confinement d'une zone à consolider par interposition de deux organes de confinement (8, 19) de part et d'autre de ladite zone.

3. Méthode selon l'une des revendications précédentes, caractérisée en ce que l'interaction de la substance liquide et du gaz réagissant intervient par échappement du gaz au travers des ouvertures latérales (11) de la partie terminale (5A) du tube d'injection.

4. Méthode selon l'une des revendications précédentes, caractérisée en ce que l'on injecte des produits solvants par le tube avant l'injection de ladite substance liquide.

5. Méthode selon l'une des revendications précédentes, caractérisée en ce qu'elle comporte des opérations d'évacuation de matériaux non consolidés encombrant ladite zone d'intervention.

6. Dispositif pour la consolidation des parois d'une zone d'un puits dévié (1) foré au travers d'une formation géologique instable (2), qui met en oeuvre la méthode selon l'une des revendications précédentes, comportant un tube d'injection (5), des moyens d'injection (6) adaptés à injecter successivement jusqu'à l'intérieur de la zone à consolider une substance liquide (L) polymérisable par action d'un gaz réagissant (G) et ensuite une quantité dudit gaz propre à la polymérisation in situ de la substance liquide, et des moyens de confinement (8, 19) pour isoler la partie du puits traversant la zone à consolider, caractérisé en ce qu'il comporte un moyen de séparation solide (10) déplaçable à l'intérieur du tube d'injection pour séparer la substance liquide (L) et le gaz réagissant (G) injectés à la suite l'un de l'autre dans le tube et empêcher leur interaction hors de la zone d'intervention, ledit tube comportant une partie terminale de communication (5A) avec le puits (1) pourvue d'ouvertures (11) réparties sur toute sa longueur, et en ce que la partie terminale (5A) du tube d'injection est entourée d'un manchon allongé (13) dont la paroi est traversée d'orifices (15) répartis sur une partie au moins de sa longueur, ledit manchon communiquant avec le tube par des ouvertures (16) ménagées dans la paroi de celui-ci à une certaine distance de son extrémité, le dispositif comportant en outre des moyens (17) pour faire communiquer le tube et le manchon par intermittence.

7. Dispositif selon la revendication précédente, caractérisé en ce que les moyens (17) de communication entre le tube et le manchon comportent une bague déplaçable à l'intérieur du tube entre une position où elle masque lesdites ouvertures et une position d'effacement, ladite bague comportant un butée (18) pour ledit moyen de séparation (10), le déplacement de celui-ci en appui contre ladite butée ayant pour effet de démasquer lesdites ouvertures (16).

## Patentansprüche

1. Verfahren zur Verfestigung der Wandungen eines abgelenkten Bohrlochs (1), das quer durch eine instabile geologische Formation (2) gebohrt ist, umfassend: die Begrenzung der zu verfestigenden Zone, indem zwischen sie und den Rest des Bohrlochs wenigstens ein Begrenzungsorgan (8) zwischengesetzt wird; das Einspritzen bis in das Innere der zu verfestigenden Zone und vermittels eines Injektionsrohrs (5), einer flüssigen Substanz (L), die durch Wirkung eines Reaktionsgases (G) polymerisierbar ist, gefolgt von der Injektion, über das gleiche Rohr einer Menge dieses Gases, das zur Polymerisation in situ der flüssigen Substanz geeignet ist, dadurch gekennzeichnet, daß es die Kombinationen der folgenden Schritte umfaßt:
- man ordnet über eine gesamte Länge des zu verfestigenden abgelenkten Bohrlochs ein Rohr mit einem Endteil (5A) an, das mit seitlichen, über seine gesamte Länge verteilten Öffnungen (11) versehen ist,
- man verteilt flüssige Substanz und reagierendes Gas über eine ganze Länge dieses Bohrlochs vermittels dieses Rohres nacheinander, indem man flüssige Substanz gemäß wenigstens einer ersten Zirkulationsphase zwischen das Innere des Rohres und den Ringraum um das Rohr einspritzt, gefolgt von wenigstens einer Phase der Unter-Drucksetzung der Substanz derart, daß deren Eindringen in die zu verfestigende Formation über eine gewisse Dicke um das Bohrloch herum beaufschlagt bzw. verstärkt wird, indem man ein festes Trennmittel (10) zwischen die flüssige Substanz (L) und das reagierende Gas (G) derart zwischenschaltet, daß deren Wechselwirkung solange verhindert wird, wie das Gas nicht in diesen Endteil des Injektionsrohres gelangt ist und man es durch Injektion dieses reagierenden Gases vortreibt.

2. Verfahren nach dem vorhergehenden Anspruch, dadurch gekennzeichnet, daß es die Begrenzung einer zu verfestigenden Zone durch Zwischenschaltung von zwei Begrenzungsorganen (8, 19) zu beiden Seiten dieser Zone umfaßt.

3. Verfahren nach einem der vorhergehenden Ansprüche, dadurch gekennzeichnet, daß die Wechselwirkung der flüssigen Substanz und des reagierenden Gases zustande kommt, indem Gas quer durch seitliche Öffnungen (11) des Endteils (5A) des Injektionsrohres entweicht.

4. Verfahren nach einem der vorhergehenden Ansprüche, dadurch gekennzeichnet, daß man Lösungsmittelprodukte durch das Rohr vor der Injektion dieser flüssigen Substanz injiziert.

5. Verfahren nach einem der vorhergehenden Ansprüche, dadurch gekennzeichnet, daß es Vorgänge des Abzugs nichtkonsolidierter Materialien umfaßt, die diese Eingriffszone ausfüllen.

6. Vorrichtung zur Verfestigung bzw. Konsolidierung der Wandungen einer Zone eines abgelenkten Bohrlochs (1), das quer durch eine geologische instabile Formation (2) gebohrt ist, zur Durchführung des Verfahrens einer der vorhergehenden Ansprüche, ein Injektionsrohr (5) umfassend, Mittel (6) zur Injektion umfassend, die so ausgelegt sind, daß sie nacheinander bis in das Innere der zu verfestigenden Zone eine flüssige Substanz (L) injizieren, die durch Wirkung eines Reaktionsmittelgases (G) polymerisierbar ist und anschließend eine Menge dieses Gases einführen, das für die Polymerisation in situ der flüssigen Substanz geeignet ist, sowie Begrenzungsmittel (8, 19) die den Teil des die zu konsolidierende Zone durchsetzenden Bohrlochs isolieren, dadurch gekennzeichnet, daß sie ein festes Trennmittel (10) umfaßt, das im Inneren des Injektionsrohres verschiebbar ist, um die flüssige Substanz (L) und das Reaktionsmittelgas (G) zu trennen, die aufeinanderfolgend in das Rohr injiziert wurden und um deren Wechselwirkung außerhalb der Eingriffszone zu vermeiden, wobei dieses Rohr einen Endteil in Verbindung (5A) mit dem Bohrloch (1) aufweist, der mit Öffnungen (11) versehen ist, die über seine gesamte Länge verteilt sind und daß der Endteil (5A) des Injektionsrohres von einem länglichen Hüllrohr (13) umgeben ist, dessen Wand von Öffnungen (15) durchsetzt ist, die wenigstens über einen Teil seiner Länge verteilt sind, wobei dieses Hüllrohr mit dem Rohr über Öffnungen (16) in Verbindung steht, die in der Wandung hiervon unter einer gewissen Entfernung von seinem Ende ausgespart sind, wobei die Vorrichtung im übrigen Mittel (17) umfaßt, um das Rohr mit dem Hüllrohr intermittierend in Verbindung setzen.

7. Vorrichtung nach dem vorhergehenden Anspruch, dadurch gekennzeichnet, daß die Mittel (17) der Verbindung zwischen dem Rohr und dem Hüllrohr einen Ring umfassen, der im Inneren des Rohres zwischen einer Position, wo er diese Öffnungen maskiert und einer versenkten Position beweglich ist, wobei dieser Ring einen Anschlag (18) für dieses Trennmittel (10) umfaßt, wobei dessen Verschiebung in Abstützung gegen diesen Anschlag die Wirkung hat, daß diese Öffnungen (16) freigelegt werden.

## Claims

1. A method for stabilising the walls of an inclined well (1) drilled through an unstable geological formation (2) by restricting the zone to be stabilised by inserting between it and the rest of the well at least one separating part (8), injecting into the interior of the zone to be stabilised by means of an injection pipe (5) a liquid substance (L) that can be polymerised by a reagent gas (G), followed by the injection through the same pipe of a quantity of the gas itself to bring about polymerisation of the liquid substance in situ characterised in that it comprises combinations of the following phases:
- a pipe with an end section (5A) provided with lateral openings (11) along its length is placed along the length of an inclined section of the well to be stabilised;
- the liquid substance and the reagent are gas are distributed successively along a length of the well by means of the pipe;
- the liquid substance is injected through at least one phase of circulation between the interior of the pipe and the annular space around the pipe followed by at least one phase of pressurising the substance so as to force it to penetrate the formation to be stabilised to a certain thickness around the well;
- a solid separating means (10) is inserted between the liquid substance (L) and the reagent gas (G) so as to prevent any interaction between them until the gas has reached the end section of the injection pipe and this means is propelled by injection of the reactive gas.

2. A method in accordance with the previous claim, characterised in that it includes confining a zone to be stabilised by inserting two separating parts (8, 19) on either side of the zone.

3. A method in accordance with one of the previous claims, characterised in that the interaction of the liquid substance and the reagent gas is caused by the escape of gas through the lateral openings (11) in the end section (5A) of the injection pipe.

4. A method in accordance with one of the previous claims, characterised in that solvent products are injected through the pipe before injection of the liquid substance.

5. A method in accordance with one of the previous claims, characterised in that it includes operations for evacuating unstable materials obstructing the working zone.

6. A device for stabilising the walls of a section of an inclined well (1) drilled through an unstable geological formation (2), which implements the method in accordance with one of the previous claims, comprising an injection pipe (5), injection means (6) adapted to inject successively to the interior of the zone to be stabilised a liquid substance (L) that can be polymerised by the action of a reagent gas (G) and then a quantity of the gas itself to polymerise the liquid substance in situ, and separating means (8, 19) to isolate the section of the well crossing the zone to be stabilised, characterised in that it has a separating means (10) that may be moved inside the injection pipe to separate the liquid substance (L) and the reagent gas (G) injected one after the other into the pipe and prevent them from interacting outside the working zone, in that the pipe has an end section for communicating (5A) with the well (1) provided with openings (11) arranged along its length and in that the end section (5A) of the injection pipe is surrounded by an extended sleeve (13) the wall of which is pierced with orifices (15) distributed along at least one section of its length, the sleeve communicating with the pipe by means of the openings (16) provided in its wall at a certain distance from its end, the device also having means (17) to enable intermittent communication between the pipe and the sleeve.

7. Device in accordance with the previous claim, characterised in that the means (17) for providing communication between the pipe and the sleeve has a ring that may be moved inside the pipe between a position at which it covers the openings and an off position, the ring having a stop (18) for the separating means (10), wherein movement of the separating means to a position resting against the stop has the effect of uncovering the openings (16).
